# EUROPEAN PATENT APPLICATION

(11) **EP 3 104 051 A1**
(43) Date of publication of application: **14.12.2016**
(21) Application number: 16160968.0
(22) Date of filing: 17.03.2016
(51) Int. Cl.: F16K 5/00, F23N 1/00, F16K 31/60

(54) **HANDLE FOR A GAS TAP**

(30) Priority: 10.06.2015 TR 201507142
(71) Applicant: Turas Gaz Armatürleri Sanayi. Ve Ticaret A.S., 34590 Istanbul (TR)
(72) Inventor: Turhan, Gokhan, Istanbul (TR); Gun, Isa, Istanbul (TR)

(57) **Abstract**

The invention relates to a two-staged handle (1.4) which is made of zamak by injection method and which is designed for gas taps (1). In the state of the art, the shafts of gas taps are produced of brass by machining or injection method. It is laborious and difficult to produce a shaft by machining. It is especially difficult to produce such a shaft with precise tolerances according to oven manufacturers' demands. The present stage handle, on the other hand, is produced of zamak by injection method with more precise measurements and tolerances, at the same time making the male conical bearing part of the gas tap compatible with Ø6 and Ø8 handles. In other words, a diameter step is provided in the section of the handle which will be introduced into the male bearing.

## Description

### TECHNICAL FIELD

The invention relates to a two-stage handle which is made of zamak by injection method and which is designed for gas taps. In the state of the art, the shafts of gas taps are produced of brass by machining or injection method. It is laborious and difficult to produce a shaft by means of machining method. It is especially difficult to produce such shaft with precise measurement tolerance according to oven manufacturers' demands. Moreover, environmental waste (chips, polluted oil, etc.) occurs during machining, and when it comes to eliminating this waste, loss of labor and time is experienced. The pin handle according to the invention, on the other hand, is produced of zamak by injection method with more precise measurements and tolerances, at the same time making the male part compatible with 06 and 08 handles. In other words, a stage is provided in the section of the handle which will be introduced into the male bearing, thereby allowing the use of staged handle without any need of male stock. In addition, the switch is prevented from being displaced thanks to the uneven surface disposed in the section whereby the staged handle is engaged with the switch.

### STATE OF THE ART

The patent application No. EP 1 744 085 registered for the firm Lincoln Brass Works, Inc. in July 11, 2006 discloses a gas valve stem (28) having a flattened region (40) and produced by cold rolling. When 5.6 Nm (50 in-lbs.) torque is applied to this gas valve stem, it does not exhibit plastic deformation. Moreover, this valve stem is produced of a metal sheet of 1.14 mm and is heat treated. Said heat treatment is performed with a view to increase the strength of the stem. In such cold rolling method, the stem surface is coated for increasing the surface quality since the surface is of low quality. This, in turn, increases the time period of the process, as well as increasing the cost. The staged handle according to the invention, however, can be produced without requiring an additional subsequent process, thanks to employing the injection method.

In light of the state of the art given above, it is a novel approach to produce the staged handle intended for gas taps according to the invention which is designed for use in domestic cookers and ovens, of zamak by injection method in a staged manner.

### OBJECTS OF THE INVENTION

The object of the invention is to provide a staged handle which is designed for use in gas taps of domestic cookers and ovens.

Another object of the invention is to produce the staged handle of zamak by injection method.

Yet another object of the invention is to allow the staged handle to use a male part compatible with both 06 and 08 handles, and to provide a staged handle in order to reduce male stock.

The structural and characteristic features and all advantages of the invention will be understood more clearly with the detailed description written by referring to the following figures; therefore, the evaluation needs to be done by taking these figures and the detailed description into consideration.

### BRIEF DESCRIPTION OF THE FIGURES

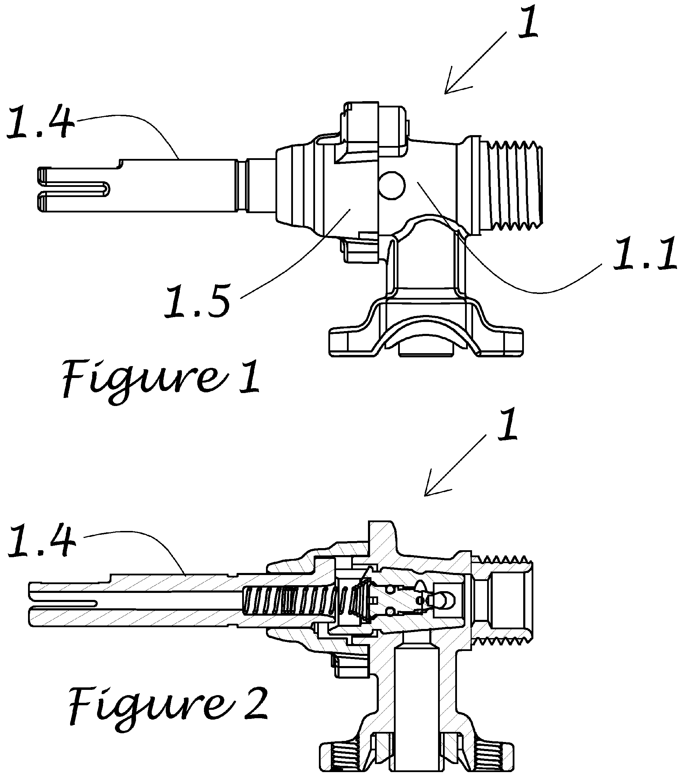

Fig. 1 is the side view of the gas tap integrated with the staged handle,
Fig. 2 is the cross-sectional view of the gas tap integrated with the staged handle,
Fig. 3 is the perspective view of the gas tap integrated with the staged handle,
Fig. 4 is the side view of the staged handle according to the invention,
Fig. 5 is the perspective view of the staged handle according to the invention,
Fig. 6 is the view of the staged handle integrated with the male, and
Fig. 7 is the perspective view of the staged handle integrated with the male.

### REFERENCE NUMERALS

1. Gas tap
   1.1. Body
   1.2. Male
   1.3. Spring
   1.4. Staged handle
      1.4.1. Stage
         1.4.1.1. Diameter
         1.4.1.2. Length
            1.4.2. 2. Stage
         1.4.2.1. Diameter
      1.4.3. Uneven surface
      1.4.4. Lug
      1.4.5. Slot
         1.4.5.1. Thickness
   1.5. Cap

### DETAILED DESCRIPTION OF THE INVENTION

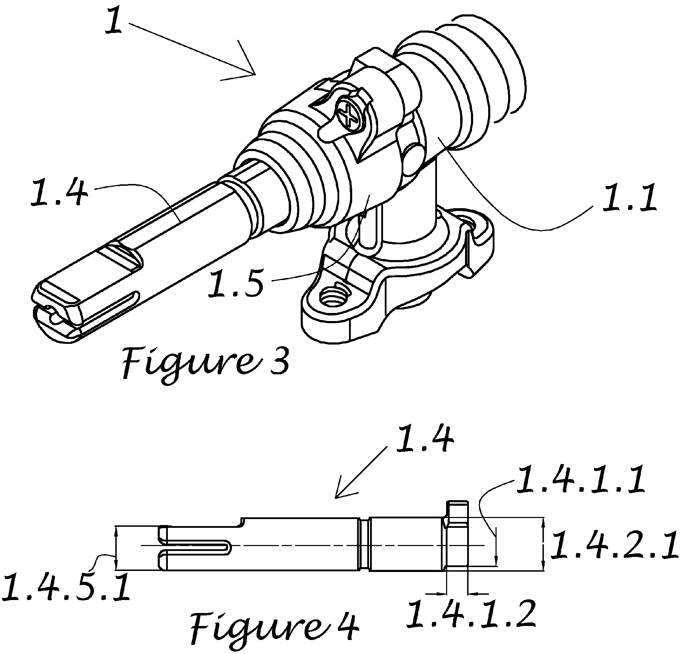

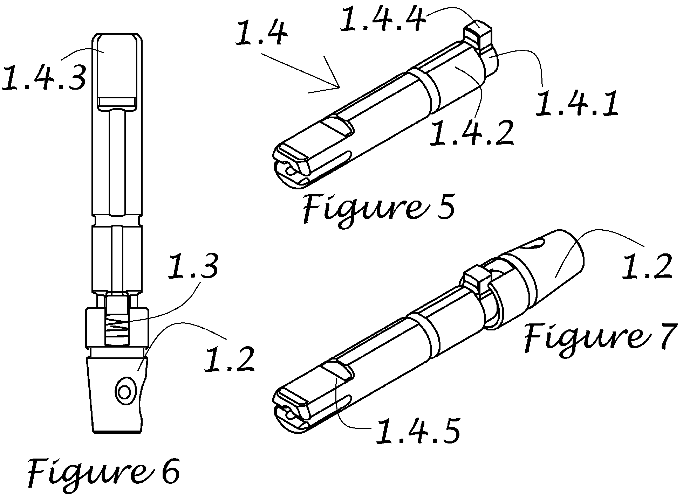

The invention comprises a staged handle (1.4), a lug (1.4.4), a slot (1.4.5), at least one uneven surface (1.4.3) on the slot (1.4.5), a stage (1.4.1), and a second stage (1.4.2); and it is designed such that it will be located inside the male (1.2) used in gas taps (1) of domestic cooking appliances. The perspective and side view of said staged handle (1.4) are shown in Figs. 5 and 4, respectively. The staged handle (1.4) according to the invention is produced of zamak by injection method with more precise measurements and tolerances, at the same time making the male (1.2) compatible with Ø6 and Ø8 handles. In other words, a stage is provided in the section of the handle (1.4) which will be introduced into the male (1.2) bearing, thereby allowing the use of staged handle (1.4) without any need of male (1.2) stock. In addition, the switch is prevented from being displaced thanks to the uneven surface (1.4.3) disposed in the section whereby the staged handle (1.4) is engaged with the slot (1.4.5). The view of the staged handle (1.4) integrated with the male (1.2) is given in Fig. 6 whereas the perspective view of the staged handle (1.4) integrated with the male (1.2) is given in Fig. 7. Thanks to the lug (1.4.4) disposed in the staged handle (1.4) according to the invention, the staged handle (1.4) properly fits in the male (1.2) located inside gas taps (1); thus, gas passage through the system is readily adjusted upon the user rotating the staged handle (1.4). There exists a stage (1.4.1) which is disposed in the section of the staged handle (1.4) to be introduced into the male (1.2), as well as a second stage (1.4.2). The diameter (1.4.1.1) of said stage (1.4.1) is 6 mm. The diameter (1.4.2.1) of said second stage (1.4.2) is 8 mm. The length (1.4.1.2) required for the stage (1.4.1) to be properly fitted in the male (1.2) is 2 to 5 mm. An uneven surface (1.4.3) is provided on the staged handle (1.4), said uneven surface being made during production by erosion method. Also disposed on the staged handle (1.4) is a slot (1.4.5) through which the switch can pass. The thickness (1.4.5.1) of said slot (1.4.5) is 3 to 7 mm.

The protection scope of this application is stated under the claims and cannot be restricted to the descriptions given only for illustrative purposes. It is because it is clear that any person skilled in the art can produce the novelty provided by the invention without drifting apart from the main subject of the invention and/or s/he can apply this novelty to other fields used in the related technique for similar purposes. Therefore, it is obvious that such embodiments will lack novelty, and especially will lack the criteria of exceeding the prior art, i.e. comprising inventive step.

## Claims

1. A staged handle (1.4) which is made of zamak by injection method and designed for use in gas taps (1) of domestic cooking appliances in a way to be situated in the inner section of the male (1.2) and which comprises a lug (1.4.4), a slot (1.4.5), an uneven surface (1.4.3) provided on said slot (1.4.5) by erosion method during production, a stage (1.4.1) and a second stage (1.4.2), **characterized in that**
• the male (1.2) is made compatible with both Ø6 and Ø8 handles by means of a stage provided on the handle (1.4),
• the switch is prevented from being displaced thanks to the uneven surface (1.4.3) disposed in the section whereby the staged handle (1.4) is engaged with the slot (1.4.5).

2. The stage (1.4.1) as in Claim 1, **characterized in that** the diameter (1.4.1.1) thereof is 6 mm.

3. The second stage (1.4.2) as in Claim 1, **characterized in that** the diameter (1.4.2.1) thereof is 8 mm.

4. The stage (1.4.1) as in Claim 1 or 2, **characterized in that** the length (1.4.1.2) required therefor to be properly fitted in the male (1.2) is 2 to 5 mm.

5. The slot (1.4.5) as in Claim 1, **characterized in that** the thickness (1.4.5.1) of said slot (1.4.5) is 3 to 7 mm.
